# EUROPEAN PATENT APPLICATION

(11) **EP 2 363 614 A1**
(43) Date of publication of application: **07.09.2011**
(21) Application number: 11151063.2
(22) Date of filing: 17.01.2011
(51) Int. Cl.: F16D 55/224

(54) **Disk brake**

(30) Priority: 11.02.2010 PL 39041910
(71) Applicant: Linter Spolka z ograniczona odpowiedzialnoscia, 32-340 Wolbrom (PL)
(72) Inventor: Marciniak, Zbyszek, 97-300 Piotrkow Trybunalski (PL)
(74) Representative: Hudy, Ludwik

(57) **Abstract**

In a disk brake comprising a stationary bottom plate of the brake with levers mounted to it in a self-aligning manner and with brake shoes with brake blocks, between which a disk (80) is located whereby to this disk (80), brake blocks are pressed by a force generated by a spring situated in a cylinder of a brake actuator with a movable guide joined with a piston rod and whereby a free end the piston rod is shaped as a lug, the levers are shaped as an external first-order lever (20) and an internal first-order lever (30), which are pivotally mounted to the stationary bottom plate (10) of the brake whereby the brake shoes (70) with the brake blocks (76) are mounted on one free end of the first-order external lever (20) and on one free end of the first-order internal lever (30) whereas the lug of the brake actuator's (50) piston rod is pivotally attached to the second free end of first-order internal lever (30) by means of pivotal joint and the brake actuator (50) has housing spherical elements of shapes, which match the ball-shaped space (45) formed in the fastening set (40) attached to the free end of the external first-order lever (20).

## Description

The present invention concerns to a disk brake applied, especially, in drives of continuous conveyance systems.

Basically, any braking system consists of two major mechanisms, namely a braking mechanism that directly impacts or acts on moving or rotating elements and slows their rotation, and a mechanism or a system actuating the brakes. The following types of the brakes actuating mechanisms are known: mechanical, hydraulic, pneumatic, electrical, and their combined whereas the combined mechanism is any configuration thereof. A moving element impacted by the braking system is usually constructed as a drum or a disk. Owing to the low compressibility of fluids, the hydraulic braking system, equipped with a hydraulic braking mechanism, is characterized by a short actuation time and its construction is relatively simple.

One of the known disk brakes solutions is disclosed in the Polish patent application No. P-369787 titled "Disk Brake to be applied in Automobile Braking Systems". In the above named solution, there is at least one calliper to clamp a brake disk that is rigidly joined with the vehicle's wheel. The calliper according to the above invention has a case with at least one opening to place a system of pistons, which press brake pads to the brake disk. The brake pads are situated in the calliper on the both sides of the disk.

In the engineering technology of drives of continuous conveyance systems, for example of transporters, one solution is known of a disk brake with a brake release. This solution is shown on webpage www.fena.pl of the company Fena Ltd. Co, Poland. The solution cited comprises a bottom plate of the brake. To this plate, two levers are mounted, namely an external second-order lever and an internal second-order lever with brake shoes provided with brake blocks. Between the brake shoes, a disk is situated to which, brake blocks are pressed by a force generated by a spring in a cylinder of the brake actuator with a movable guide joined with a piston rod. The external second-order lever and the internal second-order lever are joined by a multi-lever assembly. At the end of the last lever, a brake release or a hydraulic cylinder are held. The second end of this brake release or cylinder is usually shaped as a lug and is secured to a supporting structure. The levers are joined by many joints and therefore, the actuation time of such a brake is extended by the time necessary to eliminate plays between levers.

According to the present invention, the disk brake comprises a stationary bottom plate of the brake with levers mounted to it in a self-aligning manner, with brake shoes having brake blocks, between which a disk is located. To this disk, brake blocks are pressed by a force generated by a spring situated in a cylinder of a brake actuator with a movable guide joined with a piston rod. The free end of piston rod is shaped as a lug. The levers are shaped as an external first-order lever and an internal first-order lever, which are self-aligningly secured in the stationary bottom plate of the brake. The brake shoes with the brake blocks are mounted on one free end of the first-order external lever, as well as on one free end of the first-order internal lever. The lug of the brake actuator's piston rod is pivotally secured to the second free end of the first-order internal lever by means of pivotal joint. The brake actuator has housing spherical elements of the shapes, which match the ball-shaped space formed in the fastening set attached to the second free end of the external first-order lever.

Preferably, the housing spherical elements are shaped on the front part of the front cover and on the ring of the brake actuator's cylinder. Preferably, the ball-shaped space formed in the fastening set is surrounded by a spherical recess, its radius of curvature being R1, of a cylindrical pocket joined with a bush, as well as by a spherical recess, its radius of curvature being R1, of a ring-shaped insert seated in the bush from the side of the bush's free end.

Preferably, the housing spherical elements shaped on the front part of the front cover and on the ring of the brake actuator's cylinder, as well as the ball-shaped space formed in the fastening set create a ball-shaped joint and using this joint, the brake actuator is fastened to the first-order external lever.

Preferably, the external first-order lever is constructed of a rectangular element shaped as a wedge with a diagonal plane to which, two diagonally situated flat bars are secured, and to the free ends of those flat bars, a fastening set is mounted. The fastening set comprises a ball-shaped space, where a cylinder of the brake actuator is situated.

Preferably, the internal first-order lever is made of a rectangular element shaped as a wedge with a diagonal plane to which two diagonally situated flat bars with openings are secured. To the free ends of each of those flat bars, centrically to the openings, a conical strengthening element with an opening is secured. A pin passes through the opening and through the lug connected with the piston rod of the brake actuator.

Preferably, lever position control systems are secured to the bottom plate of the brake. The said control systems control the position of the external and internal first-order levers relatively to the disk and to the bottom plate of the brake and their elements are in contact with the first-order external and the first-order internal levers.

Preferably, the external first-order and the internal first-order levers are equipped with at least one brake shoe made of a cylinder-shaped element with a side surface sheared and with a non-centrally situated opening, where a pin of the brake shoe is placed. A brake block is secured, using bolts, to a flat plane in parallel to the longitudinal axis of the cylinder and formed when the side surface was sheared.

The invention will now be described by way of example and with reference to the accompanying drawings in which:
Fig. 1 shows a top view of a disk brake;
Fig. 2 shows a side view of the disk brake;
Fig. 3 shows a view of the stationary bottom plate of the brake from the side of the brake actuator, which is a hydraulic actuator;
Fig. 4 shows a cross section of the brake actuator and its mounting system;
Fig. 5 shows a side view of the brake shoe; and
Fig. 6 shows a B-B cross-section of the brake shoe.

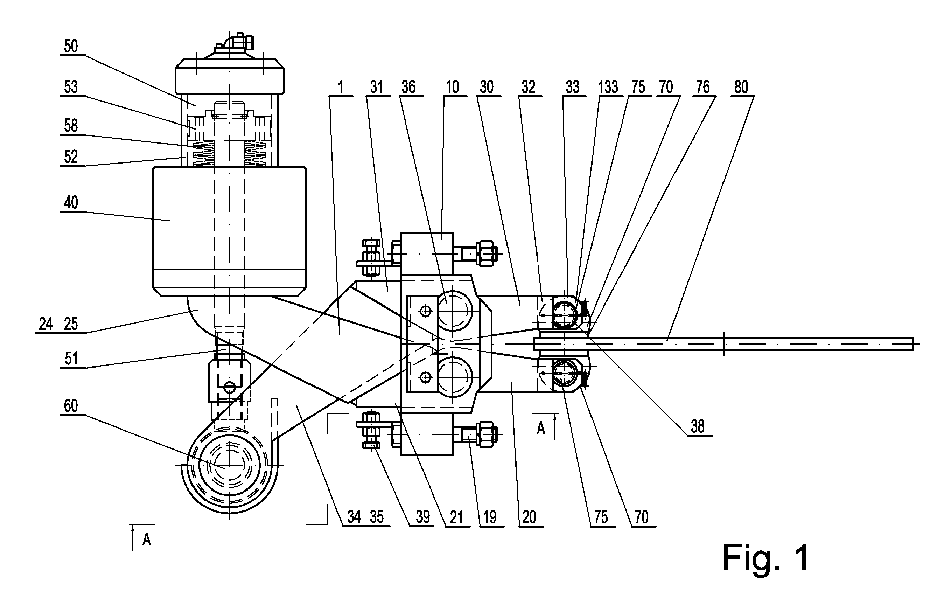

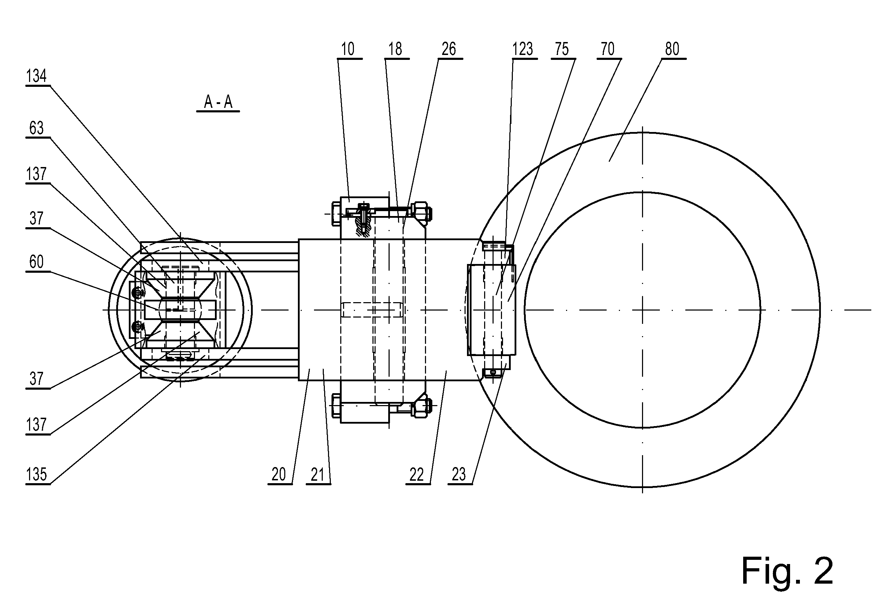

The disk brake 1, as presented in Fig. 1, 2, 3, and 4, has a hydraulic braking system that cooperates with the braking elements. This braking elements impacts or acts on a moving element, i.e. a brake disk, through the brake blocks being pressed. Essentially, the disk brake 1 comprises one immovable or stationary bottom plate 10 of the brake, to which two first-order levers 20 and 30 are pivotally fastened in a self-aligning manner. A brake actuator 50 is secured to the free ends of the first-order levers whereas one lever is symbolically named as a first-order external lever 20 or double-arm lever, and the second lever is named as a first-order internal lever 30 or double-arm level. The brake actuator 50 is mounted in the fastening set 40, which forms an end of the first-order external lever 20. The first-order internal lever 30 has, in the place where the brake actuator 50 is pivotally secured to it, a reinforcing conical element 37 with an opening 137. In the opening 137, a pin 63 is placed. The pin 63 passes through a lug 60, attached to the piston rod 51 of the brake actuator 50. The lug of the piston rod of the brake actuator 50 is attached to the internal lever 30 by means of an articulated joint. A brake shoe 70 is positioned on the other free ends of each of the levers with an opening 38, i.e. of the first-order external lever 20 and of the first-order internal lever 30, on a pin 75. On the end part of the brake shoe 70, there is a brake block 76, from the disk 80 side.

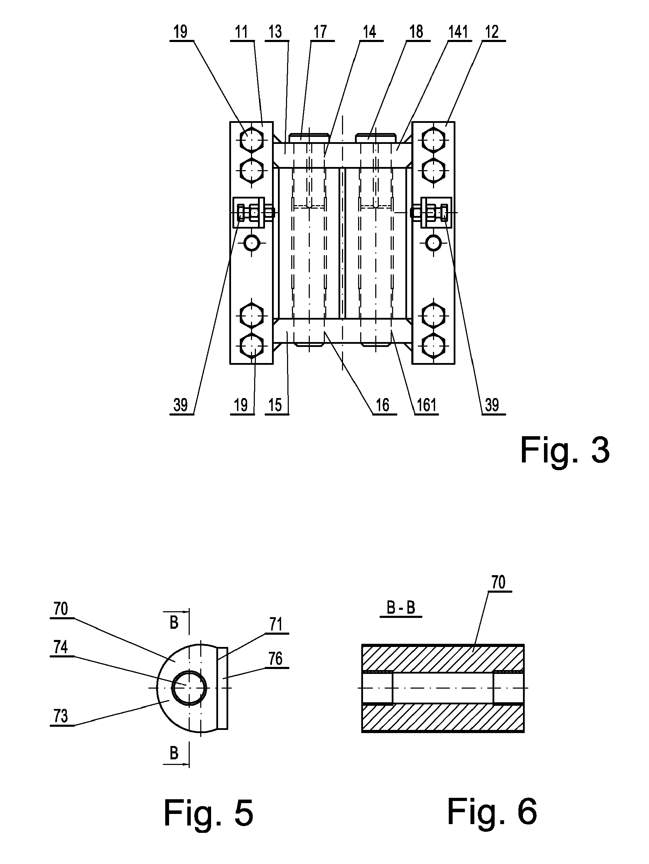

The stationary bottom plate 10 of the brake is shown in details in Fig. 3 and comprises an internal beam 11 and an external beam 12. To the beams, an internal bracket 13 with the openings 14, 141 is secured, as is an external bracket 15 with the openings 16 and 161. Between the internal bracket 13 and the external bracket 15, an internal pin 17 with a head and an external pin 18 with a head are secured. On the internal pin 17, the first-order internal lever 30 is secured in a self-aligning manner. On the external pin 18, the first-order external lever 20 is secured in a self-aligning manner. The internal pin 17 and the external pin 18 are secured in the openings 14 and 141, respectively, in the internal bracket 13, and in the openings 16 and 161, respectively in the external bracket 15. Additionally, the stationary bottom plate 10 of the brake has bolts 19 to mount it to the stationary element, for example, to a band conveyor. Moreover, the position control systems 39 of the first-order external lever 20 and of the first-order internal lever 30, controlling the positions of the lever relatively to the disk 80 and the stationary bottom plate 10 of the brake, are secured to the stationary bottom plate, since the elements of the disk 80 and the stationary bottom plate 10 contact the first-order external lever 20 and the first-order internal lever 30.

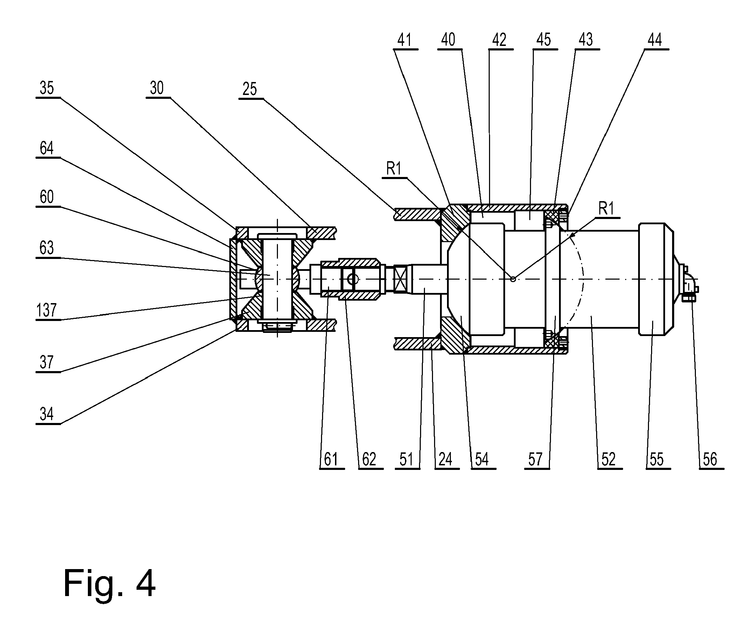

The external first-order lever 20 is made of a rectangular element 21 shaped as a wedge with a diagonal plane. To this plane, two diagonally situated flat bars 24 and 25 are secured. To one end of the first-order external lever 20, to the free ends of the flat bars 24 and 25, a fastening set 40 is mounted. The fastening set 40 comprises a ball-shaped space 45, shown in details in Fig. 4, and the centre of this space 45 is situated within the symmetry axis of the brake actuator 50. Furthermore, the fastening set 40, shown in details in Fig. 4, comprises a cylindrically-shaped seat 41 with a spherical recess of an R1 curvature radius. This cylindrically-shaped seat 41 is joined with a bush 42. At one end of the bush 42, there is a ring-shaped insert 43 with a spherical recess of an R1 curvature radius. The insert 43 is fastened in the bush 42 using a ring 44 with a male thread matching a female thread of the bush 42. The centre of the curvature R1 of the spherical recess of the cylindrical seat 41 and of the recess of the insert 43 is within the symmetry axis of the brake actuator 50, which is mounted within the ball-shaped space 45. The two facing each other spherical caps are formed from the recess in the cylindrical seat 41 and the recess in the insert 43. The housing spherical elements formed on the front part of the front cover 54 and on the ring 57 of the cylinder 52 of the brake actuator 50, as well as the ball-shaped space 45, formed in the fastening set 40, create, together, a ball-shaped joint. The housing spherical elements are surrounded by the spherical recess of an R1 curvature radius of the cylindrical seat 41 joined with the bush 42 and by the spherical recess of an R1 curvature radius of the ring-shaped insert 43. Using this ball-shaped joint, the brake actuator 50 is fastened to the first-order external lever 20. One part of the ball-shaped joint is attached to the external first-order lever 20, and the second part is attached to the brake actuator 50. Owing to the ball-shaped joint, the construction of the entire brake is very compact with the fastening joint of the actuator situated within its contour.

Situated on the other free end of the first-order external lever 20, the rectangular element 21 changes into a fork 22 with two prongs 23 and 123. Between them, a brake shoe 70 is secured on a pin 75. Moreover, the rectangular element 21 has an opening 26 that is running perpendicularly to its bottoms. The external pin 18 set in the internal bracket 13 and in the external bracket 15, passes through the opening 26. The two axes, i.e. the axis of the external pin 18 set in the internal bracket 13 and in the external bracket 15, and the axis of the pin 75, on which the brake shoe 70 is mounted, are situated in parallel to the plane of the brake disk 80, and, owing to this fact, it is ensured that the brake block 76 adheres when being operated to the brake disk 80 with its entire surface.

Similar to the first-order external lever 20, the first-order internal lever 30 is constructed of a rectangular element 31 shaped as a wedge with a diagonal plane. To this plane, two diagonally situated flat bars 34 and 35 are secured or mounted. The spacing between the flat bars 34 and 35 of the first-order internal lever 30 is smaller that the spacing between the flat bars 24 and 25 of the first-order external lever 20. The size of this spacing has been selected so as to ensure that the size measured along the external contour of the two flat bars 34 and 35 is smaller than the internal distance between the flat bars 24 and 25 of the first-order external lever 20. This specifically selected size of the spacing between the flat bars of the two levers makes it possible that the first-order internal lever 30 moves between the flat bars 24 and 25 of the first-order external lever 20.

A conical strengthening element 37 with an opening 137 is secured, centrically to the openings 134, 135, to each of the flat bars 34 and 35. A pin 63 passes through the opening 137 and, also, through the lug 60. The lug 60 has a threaded pin 61 connected with the piston rod 51 of the brake actuator 50 by a threaded bush 62. Furthermore, on the end of the first-order internal lever 30, a shield 64 is located whereby the cross-section of the shield 64 is shaped as a half ring and screens the lug 60.

Similar to the first-order external lever 20, the rectangular element 31, situated on the other free end of the first-order internal lever 30, changes into a fork 32 with two prongs 33 and 133. Between them, a brake shoe 70 is secured on a pin 75. Moreover, the rectangular element 31 has an opening 36 that is running perpendicularly to its bottoms. An internal pin 17, set in the internal bracket 13 and in the external bracket 15, passes through the opening 36. The two axes, i.e. the axis of the internal pin 17, set in the internal bracket 13 and in the external bracket 15, and the axis of the pin 75, on which the brake shoe 70 is mounted, are situated in parallel to the plane of the brake disk 80, and, owing to this fact, it is ensured that the brake block 76 adheres when being operated to the brake disk 80 with its entire surface.

Beside the piston rod 51, the brake actuator 50, which is a hydraulic actuator, also comprises a cylinder 52. In the cylinder 52, a guide 53 is placed in the movable manner and joined with the piston rod 51. Additionally, the brake actuator 50 has a front cover 54 with an opening and a rear cover 55 with a connecting element 56. Between the front cover 54 and the guide 53, there is a disk spring 58 that generates a force to press the brake blocks to the brake disk 80. The front part of the front cover 54, viewing from the side where one part of the piston rod 51 protrudes, is shaped as a spherical element or a spherical cap. The shape of the spherical element or cap matches the shape of the spherical recess of the cylindrical seat 41. What is more, a ring 57 is attached to the cylinder 52. The external surface of the ring 57 is shaped as a spherical element or a spherical cap's segment and the shape of this segment matches the shape of the recess in the insert 43.

The brake shoe 70, shown in Figs. 5 and 6, is made of a cylindrically-shaped element 73 with a non-centrically situated opening 74. In the opening 74, there is a pin 75 of the brake shoe 70. The cylinder 73 has a sheared side surface, and to the flat surface 71, which is parallel to the longitudinal axis of the cylinder 73 and was formed after the side surface was sheared, a brake block 76 is secured, using, for example, bolts. The symmetry centre of the brake block 76 of the brake shoe 70, which is secured both to the first-order external lever 20 and to the first-order internal lever 30, lies within the line perpendicular to the disk 80 and crossing the symmetry axis thereof. The brake shoes are self-adjustingly secured on the pins so as the external surface of the brake block always adjusts in parallel to the side surface of the brake disk.

## Claims

1. A disk brake comprising a stationary bottom plate of the brake with levers mounted to it in a self-aligning manner, with brake shoes with brake blocks, between which a disk is located whereby to this disk, brake blocks are pressed by a force generated by a spring situated in a cylinder of a brake actuator with a movable guide joined with a piston rod and whereby a free end the piston rod is shaped as a lug **characterised in that** the levers are shaped as an external first-order lever (20) and an internal first-order lever (30), which are pivotally mounted to the stationary bottom plate (10) of the brake whereby the brake shoes (70) with the brake blocks (76) are mounted on one free end of the first-order external lever (20) and on one free end of the first-order internal lever (30) whereas the lug of the brake actuator's (50) piston rod is pivotally attached to the second free end of first-order internal lever (30) by means of articulated joint and the brake actuator (50) has housing spherical elements of shapes, which match the ball-shaped space (45) formed in the fastening set (40) attached to the free end of the external first-order lever (20).

2. The disk brake according to claim 1, **characterised in that** the housing spherical elements are formed on both the front part of the front cover (54) and on the ring (57) of a cylinder (52) of the brake actuator (50) and the ball-shaped space (45) formed in the fastening set (40) is surrounded by a spherical recess of an R1 curvature radius of a cylindrical seat (41) joined with a bush (42) and by the spherical recess of an R1 curvature radius of a ring-shaped insert (43) secured in the bush (42) on its free end.

3. The disk brake according to claim 1, **characterised in that** the housing spherical elements formed on the front part of the front cover (54) and on the ring (57) of the cylinder (52) of the brake actuator (50) and the spherical space formed within the fastening set (40) form a ball-shaped joint by which the brake actuator (50) is fastened to the first-order external lever (20).

4. The disk brake according to claim 1, 2, or 3, **characterised in that** the external first-order lever (20) is constructed of a rectangular element (21) shaped as a wedge with a diagonal plane to which two diagonally situated flat bars (24, 25) are mounted, and to the free ends of these flat bars (24, 25), the fastening set (40) is mounted whereas the fastening set (40) comprises the ball-shaped space (45), where the cylinder of the brake actuator (50) is situated.

5. The disk brake according to claim 1, **characterised in that** the internal first-order lever (30) is made of a rectangular element (31) shaped as a wedge with a diagonal plane to which two diagonally situated flat bars (34, 35) with openings (134, 135) are secured whereby to the free ends of each of these flat bars (34, 35), centrically to the openings (134, 135), a conical strengthening element (37) with an opening (137) is secured and a pin (63) passes through the opening (137) and through the lug (60) connected with the piston rod (51) of the brake actuator (50).

6. The disk brake according to claim 1, **characterised in that** the lever position control systems (39) are secured to the stationary bottom plate (10) of the brake to control the position of the external first-order lever (20) and to the internal first-order lever (30) relatively to the brake disk (80) and to the stationary bottom plate (10) of the brake whereby elements of the lever position control systems (39) are in contact with the first-order external lever (20) and the first-order internal lever (30).

7. The disk brake according to claim 1, **characterised in that** the first-order external lever (20) and the first-order internal lever (30) are equipped with at least one brake shoe (70) made of a cylinder-shaped element (73) with a side surface sheared and with a non-centrally situated opening (74), where a pin (75) of the brake shoe (70) is placed whereby a brake block (76) is secured to a flat plane (71) in parallel to the longitudinal axis of the cylinder (73) and formed by shearing the side surface.
